# EUROPÄISCHE PATENTSCHRIFT

(11) **EP 3 103 707 B1**
(45) Veröffentlichungstag und Bekanntmachung des Hinweises auf die Patenterteilung: **26.12.2018**
(21) Anmeldenummer: 16173531.1
(22) Anmeldetag: 08.06.2016
(51) Int. Cl.: B62D 35/00

(54) **DIFFUSOR MIT ANTENNE**
DIFFUSER WITH ANTENNA
DIFFUSEUR DOTE D'ANTENNE

(30) Priorität: 09.06.2015 DE 102015210501
(43) Veröffentlichungstag der Anmeldung: 14.12.2016
(73) Patentinhaber: JOST-Werke Deutschland GmbH, 63263 Neu-Isenburg (DE)
(72) Erfinder: ALGÜERA, José Manuel, 63739 Aschaffenburg (DE)
(74) Vertreter: Mehler Achler

(56) Entgegenhaltungen:
- EP-A2- 1 630 080
- DE-A1- 2 915 284
- US-A1- 2007 013 209
- US-B1- 6 297 486
- US-B1- 7 484 791

## Beschreibung

Die Erfindung betrifft ein Luftführungselement zum Reduzieren des Luftwiderstandes eines Lastfahrzeuges gemäß den im Oberbegriff des Anspruchs 1 stehenden Merkmalen.

Unter einem Lastfahrzeug werden insbesondere Lastkraftwagen und deren Anhängefahrzeuge sowie Busse verstanden. Das Lastfahrzeug weist stets einen Laderaumaufbau auf, welcher die zum Transport vorgesehenen Güter oder Personen aufnimmt. Der Laderaumaufbau ist durch ganz oder teilweise geschlossene Seitenwände sowie eine Dachwand begrenzt. Bei schneller Vorausfahrt des Lastfahrzeuges entsteht in dem Bereich hinter dem Laderaumaufbau ein Unterdruck, welcher zu einer Sogwirkung führt und den Kraftstoffverbrauch des Lastfahrzeuges erhöht.

Im Stand der Technik wurde vielfach versucht, die Kontur des Hecks mittels eines daran angeformten Konus zu verlängern, so dass die den Laderaumaufbau überströmende Luft an dem Konus anliegt und dadurch die Sogwirkung verringert wird. So schlägt die US 2011/0068603 A1 vor, am Heck des Lastfahrzeugs eine schlauchförmige Wulst anzubringen, welche die Kontur des Laderaumaufbaus in Umfangsrichtung annähernd vollständig umgibt.

Die US 8,360,509 B2 offenbart dagegen, anstelle einer schlauchförmigen Wulst klappbare Wandelemente vorzusehen, wohingegen die US 2007/0001481 A1 einen in axialer Richtung telekopierbaren geschlossenen Konus vorschlägt.

All diese Vorrichtungen haben gemeinsam, dass die den Konus bildenden Luftleitflächen ausschließlich hinter dem Laderaumaufbau angeordnet sind, um den Luftwiderstandsbeiwert nicht zusätzlich zu erhöhen.

Der wesentliche Nachteil dieser heckseitig angebauten Luftleitflächen liegt darin, dass der Laderaumaufbau nur mit großem Aufwand entladen werden kann, da sich dessen Hecktüren nur nach einer vorausgehenden Demontage der Luftleitflächen öffnen lassen. Darüber hinaus wird aufgrund des heckseitigen Anbaus der Luftleitflächen die zulässige Fahrzeuglänge in erheblichem Maß überschritten, so dass es notwendig ist, den effektiv nutzbaren Laderaumaufbau zu kürzen.

Die EP 1 860 023 A2 schlägt vor, mittels eines formsteifen, rohrförmigen Aufbaus die während der Fahrt den Laderaumaufbau überströmende Luft im Heckbereich abzunehmen und kanalisiert dem hinter dem Heck befindlichen Unterdruck-Bereich zuzuführen. Der rohrförmige Aufbau hat sich jedoch als nachteilig herausgestellt, da dieser zu einer Erhöhung des Fahrzeugs führt, was insbesondere beim Rangieren an überdachten Ladeterminals zu einem Kontakt mit dem Dach des Ladeterminals und entsprechenden Beschädigungen sowohl an dem Dach als auch an dem rohrförmigen Aufbau führen kann. Die Höhe des rohrförmigen Aufbaus lässt sich aufgrund der Anbringung am Heck und auf der Oberseite des Laderaumaufbaus aus dem Fahrerhaus nicht einsehen und daher kaum abschätzen.

Ausgehend von dieser Problematik offenbart die US 7,862,102 B1 eine Vorrichtung zum Reduzieren des Luftwiderstandes, bei welcher am Heck eines Laderaumaufbaus ausfahrbare Spoiler angeordnet sind, die mit Hilfe von Stellzylindern bei schneller Fahrt ausgefahren werden sollen. Bei niedriger Fahrgeschwindigkeit werden die entsprechenden Spoiler mittels Stellzylinder zusammengefahren und auf dem Laderaumaufbau abgelegt, so dass die Bauhöhe der gesamten Vorrichtung reduziert ist. Der wesentliche Nachteil dieser bekannten Vorrichtung liegt darin, dass die Anzahl der das Lastfahrzeug nach oben erhöhenden Bauteile steigt und mithin gesetzliche Restriktionen nicht mehr eingehalten werden. Die US20070013209 schlägt eine fest installierte unbewegliche Empfängereinheit mit Antennenfunktion an der Seite des Laderaumaufbaus mit dem Luftführungselement vor,- und zeigt als nächster Stand der Technik die Merkmale der Präambel von Anspruch 1. Aus diesem Grund lag der Erfindung die Aufgabe zugrunde, ein Luftführungselement zu entwickeln, mit dem sich die Anzahl der das Lastfahrzeug nach oben überragenden Teile konstant halten oder verringern lässt.
Die Aufgabe wird erfindungsgemäß mit den kennzeichnenden Merkmalen des Anspruchs 1 gelöst.
Anders als ein am Heck des Laderaumaufbaus angeordneter Spoiler ist der Luftleitkanal des Luftführungselementes vorzugsweise in Umfangsrichtung im Wesentlichen geschlossen und weist allenfalls kleinflächige Durchbrüche zur Druckentlastung auf, die in Fahrtrichtung nur teilweise die Kappe oder gegebenenfalls vorhandene Seitenwände durchsetzen.
Unter einer gegenüber dem Laderaumaufbau beweglichen Anordnung der Kappe wird eine Lagerung verstanden, die insbesondere ein Auswehen der Kappe gegenüber der nächstgelegenen Wand des Laderaumaufbaus derart ermöglicht, dass der Luftleitkanal in dieser ausgestellten Position einen vergrößerten lichten Querschnitt aufweist. Das Absenken oder die zum Laderaumaufbau beabstandete Position der Kappe erfolgt vorzugsweise ausschließlich mittels der über das Lastfahrzeug streichenden Luftströmung, so dass keine weiteren Aggregate oder Steuergeräte notwendig sind. Da der Luftwiderstand beim Rangieren ohnehin zu vernachlässigen ist, kann das Luftführungselement bei langsamer Fahrt in der abgesenkten Position verbleiben und benötigt dadurch lediglich geringen Bauraum. Mit schnellerer Fahrt nimmt der Einfluss des Luftführungselementes zu, wobei dann jedoch kaum mit in den Fahrbahnraum hineinragenden Hindernissen zu rechnen ist.

Die erfindungsgemäße Vorrichtung ist besonders bevorzugt an einer Dachwand des Laderaumaufbaus befestigt, wobei sich der Luftwiderstand weiter senken lässt, wenn auch die weiteren Wände des Laderaumaufbaus, beispielsweise dessen Seitenwände, mit der Vorrichtung versehen sind.

Eine Antenne ist eine technische Vorrichtung zum Senden und zum Empfangen elektromagnetischer Wellen, wobei sowohl Linearstrahler als auch Flächenstrahler sowie Gruppenantennen zum Einsatz kommen können. Mit Hilfe der mindestens einen Antenne lassen sich zum Beispiel Radiowellen oder ein GPS-Signal empfangen. Ebenso ist es möglich, beispielsweise über ein Mobilfunknetz Fahrzeugdaten an eine Zentrale des Flottenbetreibers zu senden.

Die Antenne ist ortsfest zu dem Luftführungselement und relativ beweglich zu dem Laderaumaufbau angeordnet.

Beweglich gegenüber dem Lastfahrzeug angebrachte Antennen sind häufig von der gesetzlich vorgeschriebenen, maximalen Fahrzeughöhe ausgenommen und dürfen daher das Lastfahrzeug nach oben überragen. Durch die Integration der Antenne(n) in das Luftführungselement profitiert dieses mithin auch von der vorstehend beschriebenen, gesetzlichen Ausnahmeregelung für beweglich am Lastfahrzeug angebrachte Antennen.

Vorteilhafterweise ist die Kappe aus einem flexiblen Flächengebilde hergestellt. Unter einem flexiblen Flächengebilde wird eine Gewebe oder eine Folie verstanden, die im unbelasteten Zustand in sich zusammenfällt. Der Vorteil dieser Ausführungsform liegt darin, dass mit Unterschreiten der Luftgeschwindigkeit das Luftführungselement keine nennenswerte Erhöhung des Fahrzeuges verursacht, sondern flächig an dem Laderaumaufbau anliegt. Um seitliche Druckverluste zu verringern, sollte die Kappe an beiden seitlichen Endabschnitten über ihre gesamte Länge dichtend mit dem Laderaumaufbau verbunden sein.

Alternativ zu der vorstehend beschriebenen Ausführungsform kann die Kappe auch als formsteife Haube ausgebildet sein. Unter einer formsteifen Haube wird eine unabhängig von der Luftströmung stets gleich geformte Kappe verstanden. Bei dieser Ausführungsform wird die Variabilität der Bauhöhe gegenüber dem Laderaumaufbau durch entsprechend verstellbare Seitenwände erzielt.

Zweckmäßigerweise ist die mindestens eine Antenne in die Kappe integriert oder an der Kappe befestigt. Die axiale Erstreckung der Antenne(n) liegt somit in einer Ebene mit der Kappe, insbesondere parallel zu einer Dachwand des Lastfahrzeuges. Eine in die Kappe integrierte Bauweise bedeutet, dass die Antenne(n) zumindest teilweise von der Kappe umschlossen ist, wohingegen mit einer Befestigung der Antenne(n) an der Kappe eine einseitige, kraftschlüssige Verbindung gemeint ist. Bei dieser Ausführungsform vollzieht die Antenne vollständig die Bewegung der Kappe.

Vorzugsweise sind seitlich an der formsteifen Haube in Richtung des Laderaumaufbaus gerichtete erste Seitenwände angeordnet, die mit gegenüber dem Laderaumaufbau vorstehenden, zweiten Seitenwänden überlappen. Hierdurch ergeben sich formsteife und robuste Seitenwände, die bei jeweils gleicher Höhe unterhalb der vorgegebenen Luftgeschwindigkeit ungefähr eine hälftige Reduzierung der Bauhöhe ermöglichen.

Es hat sich als günstig herausgestellt, wenn an den ersten oder zweiten Seitenwänden ein Führungsnocken ausgebildet ist, der mit einer in den jeweils anderen Seitenwänden ausgeformten Führungskontur zusammenwirkt. Als Führungskontur kann eine Nut, Schiene oder eine entsprechend verlaufende Ausnehmung dienen, in welche der Nocken verschiebbar eingreift.

Es ist möglich, die Kappe mit einer quer zur Fahrtrichtung verlaufenden konvexen Wölbung zu versehen und seitliche Endabschnitte der Kappe unmittelbar an dem Laderaumaufbau zu befestigen. Bevorzugt ist diese Ausführungsform für Kappen aus einem flexiblen Flächengebilde. Gemäß einer anderen bevorzugten Ausführungsform ist die Kappe seitlich mittels jeweils einer flexiblen Seitenwand mit dem Laderaumaufbau verbunden. Diese Ausführungsform ist besonders günstig, wenn die Kappe als formsteife Haube ausgebildet ist. Die flexiblen Seitenwände wie auch die überlappenden ersten und zweiten Seitenwände ermöglichen einen maximalen Querschnitt des Luftleitkanals und verringern dabei Druckverluste in seitlicher Richtung. Besonders bevorzugt sind die flexiblen Seitenwände über ihre gesamte Länge dichtend mit dem Laderaumaufbau verbunden.

Vorteilhafterweise ist die mindestens eine Antenne in die erste, zweite oder flexible Seitenwand integriert oder an dieser befestigt. Dabei kann/können die Antenne(n) auch eine Haltefunktion der Kappe an dem Lastfahrzeug übernehmen.

Zweckmäßigerweise ist die Kappe mittels von Distanzelementen an dem Laderaumaufbau gehalten und die Antenne ist aus einem oder mehreren Distanzelementen gebildet oder in diese integriert. Die Distanzelemente beschränken das Anheben der Kappe oberhalb der vorgegebenen Luftgeschwindigkeit. Hierdurch wird die Kappe nicht nur in ihren seitlichen Bereichen oder mittels der Seitenwände fixiert, sondern auch an mehreren Stellen quer zur Fahrtrichtung, wodurch die Belastung in den seitlichen Bereichen oder den Seitenwänden der Kappe erheblich verringert wird.

Die Distanzelemente können hierfür an der Kappe und dem Laderaumaufbau angreifen und sollten in Bewegungsrichtung der Kappe flexibel und derart bemessen sein, dass ein vollständiges Absenken und Anheben der Kappe möglich ist.

Vorteilhafterweise sind die Distanzelemente aus Gurten oder Seilen gebildet, die einen verhältnismäßig geringen Luftwiderstand aufweisen.

Alternativ oder ergänzend zu Gurten oder Seilen können die Distanzelemente auch im Wesentlichen in Fahrtrichtung verlaufende Rippen sein. Mit Hilfe der Rippen kann die über die Lufteintrittsöffnung in den Luftleitkanal eintretende Luftströmung gelenkt und innerhalb des Luftleitkanals ein homogener Staudruck eingestellt werden. Dadurch wird insbesondere das Risiko eines Einfallens der Kappe in dessen seitlichen Randbereichen verringert.

Die Rippen sind vorteilhafterweise zwischen den ersten und zweiten Seitenwänden oder den flexiblen Seitenwänden angeordnet.

Vorzugsweise sind die Rippen ebenfalls aus einem flexiblen Flächengebilde hergestellt und daher geeignet, ein Absenken oder Aufstellen der Kappe zuzulassen.

Eine weitere alternative Ausführungsform sieht vor, dass die Distanzelemente aus drehbeweglich an der Kappe und dem Laderaumaufbau gelagerten Schwenkarmen gebildet sind. In diesem Fall findet das Aufstellen der Kappe um jeweils einen festen Drehpunkt im Bereich des Laderaumaufbaus entsprechend des Radius der Schwenkarme statt. Diese Ausführungsform lässt sich unabhängig von der Ausführung der Kappe realisieren und ermöglicht, sofern die Lagerachsen der Schwenkarme quer zur Fahrtrichtung ausgerichtet sind, eine seitliche Führung der Kappe, was insbesondere bei Seitenwind von Vorteil ist.

Günstigerweise ist an der Kappe eine bis zur Luftaustrittsöffnung verlaufende Schürze befestigt. Die Schürze verlängert den Luftleitkanal insbesondere bis in den entgegen der Fahrtrichtung hinter dem Laderaumaufbau gelegenen Bereich. Hierfür bildet die Schürze gegenüber dem im Wesentlichen longitudinal verlaufenden Luftleitkanal eine Abwinklung, durch welche der Luftstrom in den während der Fahrt einen Unterdruck aufweisenden Bereich hinter dem Laderaumaufbau gelangt. Die Schürze ist mit ihrem ersten Ende dauerhaft an der Kappe angebracht und spannt mit ihrem gegenüberliegenden zweiten Ende die Luftaustrittsöffnung auf.

Die Schürze kann außerdem an den Seitenwänden befestigt sein und damit einen Druckabfall innerhalb des Luftleitkanals vor der Luftaustrittsöffnung verhindern. Somit ist der Luftleitkanal durch die Kappe sowie die Schürze und gegebenenfalls durch die Seitenwände definiert.

Sofern die Schürze aus einem formsteifen Material hergestellt ist, wandert die Luftaustrittsöffnung in vertikaler Richtung zusammen mit der Kappe auf und nieder. Hierfür ist es sinnvoll, die Schürze in Bewegungsrichtung an dem Laderaumaufbau mittels einer Führung zu befestigen.

Alternativ kann auch vorgesehen sein, die Schürze aus einem flexiblen Flächengebilde herzustellen. Bei dieser Ausführungsform ist die Bewegung der Kappe von der Luftaustrittsöffnung entkoppelt, so dass diese stets ortsfest hinter dem Laderaumaufbau verbleibt. Bei langsamer Fahrt oder Stillstand des Lastfahrzeuges fällt die aus einem flexiblen Flächengebilde beschaffene Schürze in sich zusammen.

Gemäß einer besonders vorteilhaften Ausführungsform sind in der Lufteintrittsöffnung elastische Spangen angeordnet, welche die Kappe gegenüber dem Laderaumaufbau abstützen. Hierdurch erfolgt bereits bei vergleichsweise langsamer Fahrt des Lastfahrzeuges eine günstige Füllung des Luftleitkanals durch den Luftstrom und damit ein rechtzeitiges Abheben der Kappe.

Zweckmäßigerweise weist die Kappe im Bereich der Lufteintrittsöffnung eine insbesondere starre Auftriebsklappe auf. Die Auftriebskappe stellt eine erste Möglichkeit dar, ein Abheben der Kappe gegenüber dem Laderaumaufbau zu realisieren. Die Auftriebsklappe kann in Fahrtrichtung des Lastfahrzeuges schräg nach oben angestellt sein.

Vorzugsweise ist die Kappe mit einem Flügelprofil ausgebildet. Diese zweite Möglichkeit, einen Auftrieb der Kappe gegenüber dem Laderaumaufbau herbeizuführen, lässt sich auch mit der ersten Möglichkeit einer Auftriebsklappe kombinieren. Als Flügelprofil bezeichnet man in der Strömungslehre die Form des Querschnitts eines Körpers in Strömungsrichtung. Durch die spezifische Form und die Umströmung durch eine Flüssigkeit oder ein Gas entstehen an diesen Körpern angreifende Kräfte. Ein Flügelprofil eignet sich besonders für die Erzeugung von dynamischem Auftrieb bei geringem Strömungswiderstand.

Bei Ausführungsformen mit einer Kappe als formsteife Haube, kann das Flügelprofil durch die formsteife Haube selbst gebildet sein. Die formsteife Haube kann beispielsweise durch einen geschäumten Körper oder ein Kunststoffformteil gebildet sein. Eine aus einer formsteifen Haube gefertigte Kappe hat ein besonders effektives Flügelprofil, das auch bei teilweiser turbulenter Anströmung ein Abheben der Kappe ermöglicht. Auch bei starkem Einfluss eines in Richtung und Stärke wechselhaften atmosphärischen Windes erzeugt die formsteife Haube ausreichend Auftrieb, so dass der Luftleitkanal geöffnet ist.

Alternativ hierzu kann das Flügelprofil auch durch das flexible Flächengebilde ausgeformt sein, wobei sich das Flügelprofil erst bei Vorliegen einer ausreichend großen Luftströmung ausbildet.

Zweckmäßigerweise ist dann in dem flexiblen Flächengebilde eine in Fahrtrichtung und/oder in Richtung des Laderaumaufbaus offene Tasche ausgebildet, die von der Luftströmung füllbar ist. Hierdurch wird die Tasche ausgesteift und das in dem flexiblen Flächengebilde vorgegebene Flügelprofil stabilisiert.

Vorteilhafterweise ist die Tasche von einem Obersegel und einem Untersegel gebildet. Das Obersegel ist mit dem Untersegel an deren Leeseite miteinander verbunden. Ebenso sollten Obersegel und Untersegel an der luvseitigen Anströmkante miteinander verbunden sein, wobei die offene Tasche vorzugsweise eine zwischen Obersegel und Untersegel angeordnete Füllöffnung aufweist.

Die Füllöffnung kann mittels Spreizen offengehalten sein, so dass zum Beispiel auch bei nassem Ober- und Untersegel eine Füllung der Tasche erfolgt und sich das Flügelprofil ausbilden kann.

Günstigerweise weist der Luftleitkanal ausgehend von der Lufteintrittsöffnung in Richtung der Luftaustrittsöffnung einen konisch zulaufenden Abschnitt auf. Hierdurch wird vorzugsweise ergänzend zu dem Auftriebseffekt der Kappe ein Staudruck innerhalb des Luftleitkanals aufgebaut und ein maximaler Innenquerschnitt dessen erzielt.

Vorteilhafterweise weist der Luftleitkanal einen variablen Querschnitt in Abhängigkeit der Position der Kappe auf. Bei Stillstand oder langsamer Fahrt des Lastfahrzeuges hat der Luftleitkanal seinen geringsten Querschnitt, wobei dieser bei einer Kappe aus einem flexiblen Flächengebilde oder flexiblen Seitenwänden vollständig geschlossen sein kann. Die Kappe liegt dann vollflächig auf dem Laderaumaufbau oder schmiegt sich an diesen an.

Vorzugsweise befindet sich die Lufteintrittsöffnung in Fahrtrichtung über dem Laderaumaufbau und die Luftaustrittsöffnung ist hinter dem Laderaumaufbau, innerhalb dessen Querschnittskontur, angeordnet. Durch diese Ausführung wird der über und gegebenenfalls neben dem Lastfahrzeug vorbeistreichende Luftstrom besonders effektiv in den Bereich des hinter dem Lastfahrzeug vorhandenen Unterdruckes eingeleitet.

Zur besseren Nachvollziehbarkeit wird die Erfindung nachfolgend anhand von 9 Figuren näher erläutert. Es zeigen die
- **Fig. 1:**: eine Seitenansicht auf ein Lastfahrzeug mit mehreren im Heckbereich eines Lastfahrzeuges angeordneten Luftführungselementen;
- **Fig. 2:**: eine Vorderansicht eines Luftführungselementes gemäß einer ersten Ausführungsform;
- **Fig. 3:**: eine Seitenansicht auf das Luftführungselement gemäß Fig. 2 in ausgestellter und abgesenkter Position;
- **Fig. 4:**: eine Vorderansicht des Luftführungselementes gemäß einer zweiten Ausführungsform;
- **Fig. 5:**: eine Seitenansicht auf das Luftführungselement gemäß Fig. 4;
- **Fig. 6:**: eine Seitenansicht des Luftführungselementes gemäß einer dritten Ausführungsform;
- **Fig. 7:**: eine Seitenansicht des Luftführungselementes gemäß einer vierten Ausführungsform;
- **Fig. 8:**: eine Vorderansicht auf das Luftführungselement gemäß Fig. 7 und
- **Fig. 9:**: eine Draufsicht auf ein Luftführungselement gemäß der Fig. 1 bis 8.

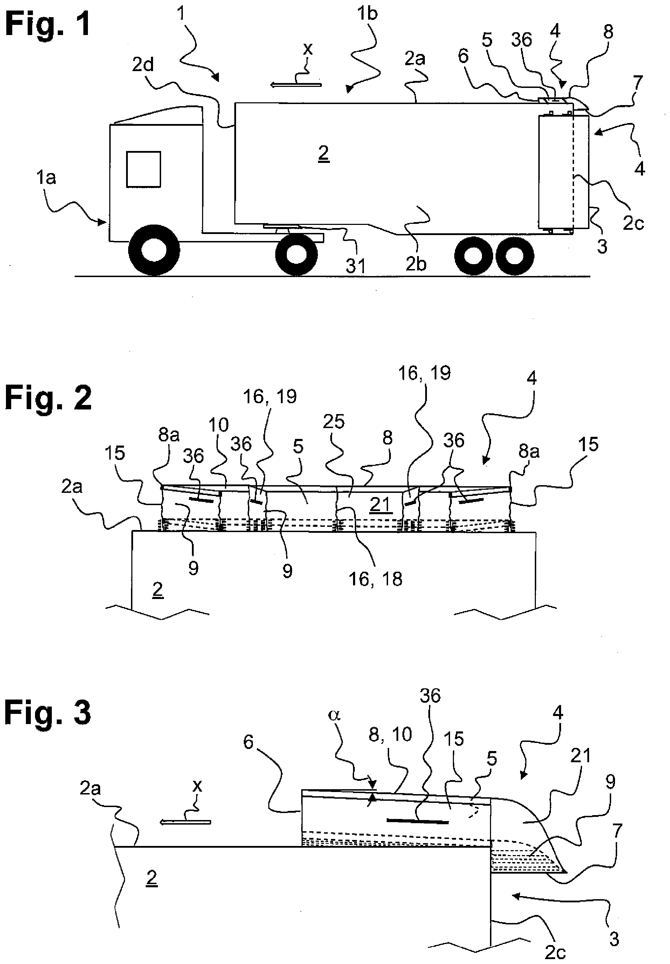

Die Fig. 1 zeigt eine Seitenansicht auf ein Lastfahrzeug 1 bestehend aus einer Sattelzugmaschine 1a und einem mittels einer Sattelkupplung 31 lösbar daran befestigten Sattelauflieger 1b. Der Sattelauflieger 1b weist einen Laderaumaufbau 2 auf, in welchem vor äußeren Einflüssen geschützt Waren transportiert werden können.

Der Laderaumaufbau 2 ist durch eine Dachwand 2a, zwei gegenüberliegende, sich in Fahrtrichtung x erstreckende Seitenwände 2b, eine in Fahrtrichtung x den Laderaumaufbau 2 zur Sattelzugmaschine 1a abgrenzende Frontwand 2d sowie eine Heckwand 2c gebildet. Insbesondere die Heckwand 2c kann zum Be- und Entladen mit schwenkbaren Türen (nicht gezeigt) versehen sein.

Im Heckbereich 3 des Laderaumaufbaus 2 befinden sich an der Dachwand 2a sowie an den Seitenwänden 2b jeweils ein Luftführungselement 4. Jedes der drei Luftführungselemente 4 weist einen in Fahrtrichtung x ausgerichteten Luftleitkanal 5 mit einer in Fahrtrichtung x befindlichen Lufteintrittsöffnung 6 sowie einer am gegenüberliegenden Ende liegenden Luftaustrittsöffnung 7 auf. Die Luftaustrittsöffnung 7 sollte mit einem gegenüber dem Luftleitkanal 5 und auch der Lufteintrittsöffnung 6 größeren Querschnitt ausgebildet sein. Hierdurch wird eine Diffusor-Wirkung mit einer verringerten Geschwindigkeit der das Luftführungselement 4 durchströmenden Luft bei gleichzeitiger Erhöhung dessen Druckes erzielt. Die Luftaustrittsöffnung 7 liegt außerdem innerhalb der Querschnittskontur des Laderaumaufbaus 2 und somit in einem Bereich, in dem sich während des Fahrbetriebes ein Unterdruck ausbildet. Die Ausrichtung der Luftaustrittsöffnung 7 liegt grundsätzlich in einer Ebene mit der Fahrtrichtung x.

Das an der Dachwand 2a befindliche Luftführungselement 4 weist eine Antenne 36 zum Empfangen und zum Senden von Funkwellen auf.

Die Luftführungselemente 4 befinden sich in der Darstellung der Fig. 1 bezüglich des Laderaumaufbaus 2 in einer abgehobenen Position, das heißt während schneller Fahrt des Lastfahrzeuges 1.

In den Darstellungen der Fig. 2 und Fig. 3 befindet sich das Luftführungselement 4 bezüglich des Laderaumaufbaus 2 in einer abgehobenen Position. Eine auf den Laderaumaufbau 2 abgesenkte Position ist jeweils mit gestrichelten Linien angedeutet.

Die Fig. 2 zeigt in einer Vorderansicht ein Luftführungselement 4 gemäß einer ersten Ausführungsform, welches beispielhaft auf der Dachwand 2a eines Laderaumaufbaus 2 angeordnet ist. In gleicher Weise könnte das Luftführungselement 4 auch an den Seitenwänden 2b angebracht und gegenüber diesen verstellbar sein.

Das Luftführungselement 4 umfasst eine Kappe 8, die als formsteife Haube 10 ausgebildet ist. Die formsteife Haube 10 ist als ebene Platte ausgebildet, deren seitlichen Randbereiche um 90° in Richtung des Laderaumaufbaus 2 abgekantet sind. An beiden seitlichen Endabschnitten 8a der formsteifen Haube 10 sind über die gesamte axiale Erstreckung des Luftführungselementes 4 flexible Seitenwände 15 angebracht, die bis zur Dachwand 2a herunterreichen und an dieser über ihre gesamte Länge befestigt sind. Die Dachwand 2a, die flexiblen Seitenwände 15 und die Kappe 8 spannen zusammen mit einer an der Kappe 8 und den flexiblen Seitenwänden 15 befestigten Schürze 21 einen Luftleitkanal 5 auf, der das Luftführungselement 4 von der Lufteintrittsöffnung 6 bis zu der Luftaustrittsöffnung 7 durchsetzt.

In dem Luftleitkanal 5 befinden sich zwischen den flexiblen Seitenwänden 15 außerdem Distanzelemente 16 in Form von Rippen 19, die ebenfalls über die axiale Erstreckung der Kappe 8 verlaufen. Die Rippen 19 bestehen wie die flexiblen Seitenwände 15 aus einem flexiblen Flächengebilde 9 und ermöglichen dadurch eine Vertikalbewegung der Kappe 8 zwischen einer abgesenkten und einer angehobenen Position. Die Rippen 19 sind im Wesentlichen in Fahrtrichtung x ausgerichtet und dienen neben den flexiblen Seitenwänden 15 der Befestigung der Kappe 8 an dem Laderaumaufbau 2.

Das Distanzelement 16 kann alternativ auch als Seil 18 ausgebildet sein, welches vorzugsweise im Bereich der Lufteintrittsöffnung 6 angeordnet ist. Das Seil 18 sorgt für einen geringeren Luftwiderstand, ermöglicht allerdings lediglich eine punktförmige Lastaufnahme gegenüber einer sich linienförmig erstreckenden Rippe 19.

Sowohl an den flexiblen Seitenwänden 15 als auch an den Distanzelementen 16 sind Antennen 36 befestigt.

Der Niveauunterschied des Luftleitkanals 5 zwischen der Lufteintrittsöffnung 6 und der Luftaustrittsöffnung 7 ist mittels der Schürze 21 überbrückt, die an der Kappe 8 und beiden flexiblen Seitenwänden 15 angebracht ist. Auch die Schürze 21 ist aus einem flexiblen Flächengebilde 9 hergestellt und lässt dadurch die vertikale Bewegung der Kappe 8 zu.

Die Kappe 8 ist bezogen auf die Dachwand 2a um den Winkel □ geneigt und steht in Fahrtrichtung x nach oben, wodurch zunächst bei zunehmender Fahrgeschwindigkeit ein Auftrieb der Kappe 8 generiert wird und sich außerdem aufgrund des konisch zulaufenden Luftleitkanals 5 in diesem ein Staudruck ausbildet, welcher die Kappe 8 in der abgehobenen Position hält.

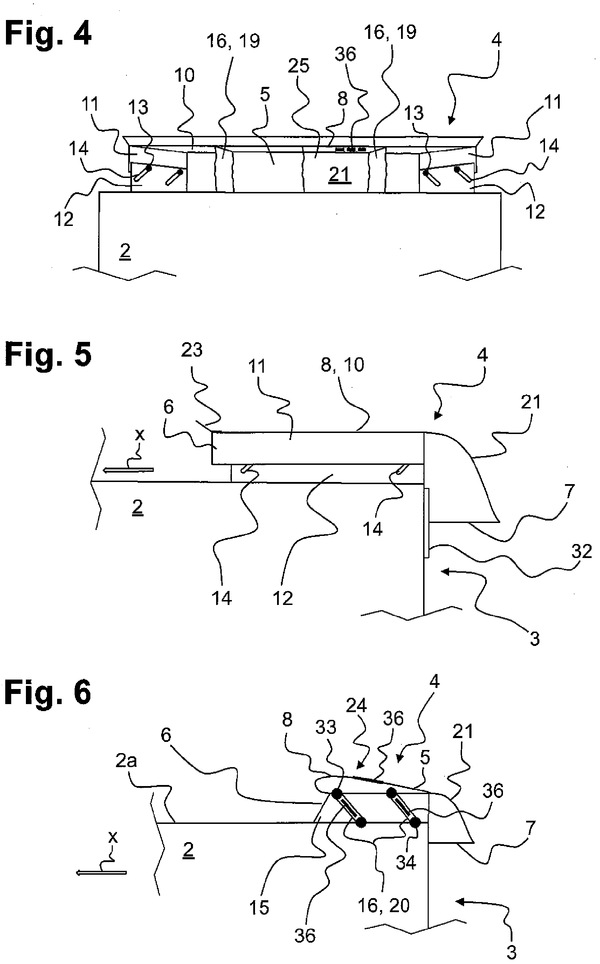

Die Fig. 4 und Fig. 5 zeigt eine zweite, alternative Ausführungsform, bei welcher die Kappe 8 ebenfalls als formsteife Haube 10 ausgebildet ist, in welche die Antenne 36 integriert ist. Anstelle flexibler Seitenwände 15 sind jedoch ortsfest an der Kappe 8 angreifende erste Seitenwände 11 vorgesehen, die formstabil von der Kappe 8 in Richtung des Laderaumaufbaus 2 vorstehen und dabei zumindest teilweise zweite Seitenwände 12 überlappen. Die zweiten Seitenwände 12 sind ortsfest an dem Laderaumaufbau 2, insbesondere an der Dachwand 2a, befestigt.

In den ersten und zweiten Seitenwänden 11, 12 sind Mittel zur Zwangsführung der Kappe 8 zwischen einer abgesenkten und einer abgehobenen Position integriert. Gemäß der Fign. 4 und 5 sind in den zweiten Seitenwänden 12 Führungskonturen 14 ausgeformt, beispielsweise in Form von länglichen Schlitzen. Die ersten Seitenwände 11 weisen Führungsnocken 13 auf, die in die Führungskonturen 14 hinein- oder hindurchreichen, so dass die Kappe 8 dem Verlauf der Führungskonturen 14 folgen kann. In gleicher Weise und ohne funktionale Einbußen könnten die Führungsnocken 13 an den zweiten Seitenwänden 12 und die Führungskonturen 14 an den ersten Seitenwänden 11 vorgesehen sein.

Die formsteife Haube 10 ist als ebene Platte ausgeformt und parallel zur Dachwand 2a ausgerichtet. Insofern erzeugt die formsteife Haube 10 als solches keinen Auftrieb. Im Bereich der Lufteintrittsöffnung 6 weist die formsteife Haube 10 eine in Fahrtrichtung x vom Laderaumaufbau 2 weg gerichtete Auftriebsklappe 23 auf, die bei Anströmung ein Anheben der formsteifen Haube 10 initiiert.

Die Schürze 21 kann als flexibles Flächengebilde 9 oder, wie in Fig. 5 dargestellt, aus einem formsteifen Material ausgebildet sein. Für die letztgenannte Ausführungsform ist es jedoch vorteilhaft, wenn die Schürze 21 an der Kappe 8 und den ersten Seitenwänden 11 befestigt und zusätzlich am Laderaumaufbau 2 in Bewegungsrichtung mittels einer Linearführung 32 gehalten ist. Bei dieser Ausführungsform bewegt sich die Luftaustrittsöffnung 7 in gleichem Maße wie die Kappe 8.

In der Fig. 6 ist eine dritte Ausführungsform des Luftführungselementes 4 dargestellt, bei welcher die Kappe 8 als starres Flügelprofil 24 ausgebildet ist. Die Kappe 8 ist mittels mehrerer Distanzelemente 16 in Form von Schwenkarmen 20 gelenkig mit dem Laderaumaufbau 2 verbunden, wobei vorzugsweise auf jeder Seite der Kappe 8 zwei Schwenkarme 20 angreifen. Jeder Schwenkarm 20 weist ein Kappenschwenklager 33 und ein Laderaumaufbauschwenklager 34 auf, deren Schwenkachsen jeweils quer zur Fahrtrichtung x ausgerichtet sind. Bei Überschreiten eines vorgegebenen Schwellenwertes der Luftgeschwindigkeit schwenkt die Kappe 8 um die Laderaumaufbauschwenklager 34 in die abgehobene Position und spannt dadurch den Luftleitkanal 5 auf. Die Schwenkarme 20 dienen jeweils als Antenne 36, wobei ergänzend noch eine Antenne 36 auf das starre Flügelprofil 24 geklebt ist.

Der vertikale Bewegungsumfang der Kappe 8 wird durch an den Kappen- und Laderaumaufbauschwenklagern 33, 34 angeordnete Stopper begrenzt (nicht gezeigt). In der abgesenkten Position der Kappe 8 liegt die Unterseite des Flügelprofils 24 vollflächig auf der Dachwand 2a des Laderaumaufbaus 2 auf.

Von der Kappe 8 erstrecken sich auf beiden Seiten des Luftleitkanals 5 flexible Seitenwände 15 bis zum Laderaumaufbau 2 so dass der Luftleitkanal 5 unabhängig von der Position der Kappe 8 seitlich stets durch die flexiblen Seitenwände 15 begrenzt ist.

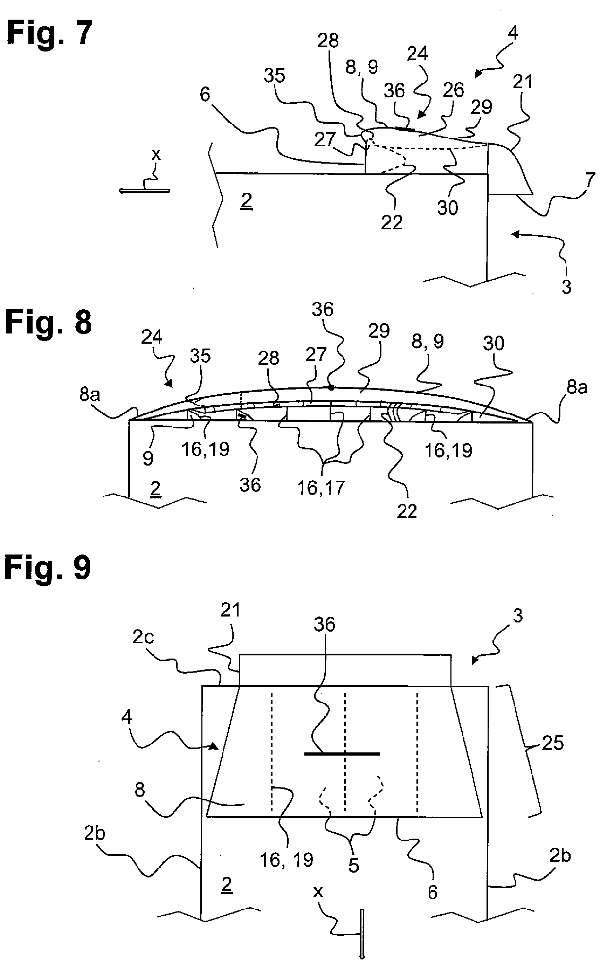

In den Fign. 7 und 8 ist eine vierte Ausführungsform des Luftleitelementes 4 mit einer als Flügelprofil 24 ausgebildeten Kappe 8 vorgestellt, wobei jedoch die Kappe 8 aus einem flexiblen Flächengebilde 9 hergestellt ist und sich das Flügelprofil 24 nach Überschreiten der Luftgeschwindigkeit aufbläht. Die Kappe 8 weist vorzugsweise ein Obersegel 29 und ein Untersegel 30 auf, die an dem der Fahrtrichtung x entgegengesetzten Ende miteinander verbunden sind und dadurch eine Tasche 26 formen. An dem in Fahrtrichtung x liegenden Ende der Tasche 26 ist das Obersegel 29 um bis zu 180° nach unten umgelegt und bildet dadurch eine Anströmkante 35, die wiederum mit dem Untersegel 30 verbunden ist. Über einen Großteil der Breite der Kappe 8 befindet sich zwischen Anströmkante 35 und dem Untersegel 30 eine Füllöffnung 27, durch welche Luft in die Tasche 26 einströmt und durch Stauwirkung die Kappe 8 bis in die seitlichen Bereiche aussteift.

In das Obersegel 29 ist eine Antenne 36 eingenäht.

Um insbesondere bei Nässe und einem am Laderaumaufbau 2 anhaftenden flexiblen Flächengebilde 9 ein Abheben der Kappe 8 zu gewährleisten, können die Füllöffnungen 27 durch Spreizen 28 offengehalten werden. Diese sollten aus einem flexiblen Material, wie zum Beispiel Kunststoff oder Draht, gefertigt sein und beidseitig der Füllöffnung 27 an dem Obersegel 29 und dem Untersegel 30 angreifen.

Darüber hinaus kann ein Abheben der Kappe 8 verbessert werden, in dem die Anströmkante 35 der Kappe 8 mittels elastischer Spangen 22 gegenüber dem Laderaumaufbau 2 abgestützt und hierdurch die Lufteintrittsöffnung 6 zumindest teilweise offengehalten ist. Aus Übersichtsgründen sind in der Fig. 8 lediglich 3 elastische Spangen 22 angedeutet; in der Praxis sollten jedoch eine Vielzahl von elastischen Spangen 22 über die gesamte Breite der Füllöffnung 27 verteilt angeordnet sein.

In der Darstellung der Fig. 8 sind das Obersegel 29 und das Untersegel 30 jeweils mit dem Laderaumaufbau 2 verbunden. Es wäre jedoch ebenso möglich, in den seitlichen Endabschnitten 8a der Kappe 8 das Obersegel 29 und das Untersegel 30 zu vereinen und den jeweiligen Endabschnitt 8a dann einlagig mit dem Laderaumaufbau 2 zu verbinden.

Zwischen Untersegel 30 und Dachwand 2a können als Distanzelemente 16 im Wesentlichen in Fahrtrichtung x verlaufende Rippen 19 vorgesehen sein, die zweckmäßigerweise auch aus einem flexiblen Flächengebilde 9 beschaffen sind. Anstelle oder ergänzend zu den Rippen 19 können als Distanzelemente 16 auch Gurte 17 zum Einsatz kommen, die äußerst hohe Lasten aufnehmen können und zudem unanfällig gegen Verdrehen sind.

Die Fig. 9 zeigt ein Luftführungselement 4 unabhängig von seiner Ausführungsform in der Draufsicht, wobei die Kappe 8 entgegen der Fahrtrichtung x einen konisch zulaufenden Abschnitt 25 aufweist. Dieser dient dazu, einen Staudruck unter der Kappe 8 aufzubauen und dadurch das Anheben der Kappe 8 zu unterstützen. Auf der Oberseite der Kappe 8 ist die Antenne 36, ausgerichtet quer zur Fahrtrichtung x, sichtbar angebracht.

### Bezugszeichenliste

- 1: Lastfahrzeug
- 1a: Sattelzugmaschine
- 1b: Sattelauflieger
- 2: Laderaumaufbau
- 2a: Dachwand
- 2b: Seitenwand
- 2c: Heckwand
- 2d: Frontwand
- 3: Heckbereich Laderaumaufbau
- 4: Luftführungselement
- 5: Luftleitkanal
- 6: Lufteintrittsöffnung
- 7: Luftaustrittsöffnung
- 8: Kappe
- 8a: seitlicher Endabschnitt
- 9: flexibles Flächengebilde
- 10: formsteife Haube
- 11: erste Seitenwand
- 12: zweite Seitenwand
- 13: Führungsnocken
- 14: Führungskontur
- 15: flexible Seitenwand
- 16: Distanzelement
- 17: Gurt
- 18: Seil
- 1: 9 Rippe
- 20: Schwenkarm
- 21: Schürze
- 22: elastische Spangen
- 23: Auftriebsklappe
- 24: Flügelprofil
- 25: konischer Abschnitt
- 26: Tasche
- 27: Füllöffnung
- 28: Spreizen
- 29: Obersegel
- 30: Untersegel
- 31: Sattelkupplung
- 32: Linearführung Schürze
- 33: Kappenschwenklager
- 34: Laderaumaufbauschwenklager
- 35: Anströmkante
- 36: Antenne

- □: Winkel Kappe/Dachwand
- x: Fahrtrichtung

## Patentansprüche

1. Luftführungselement (4) zum Reduzieren des Luftwiderstandes eines Lastfahrzeuges (1) mit einem Laderaumaufbau (2), welches im Heckbereich (3) des Laderaumaufbaus (2) von außen anbringbar ist und einen Luftleitkanal (5) mit einer in Fahrtrichtung (x) vorderen Lufteintrittsöffnung (6) und einer hinteren Luftaustrittsöffnung (7) ausbildet, wobei das Luftführungselement (4) eine den Luftleitkanal (5) begrenzende und beweglich gegenüber dem Laderaumaufbau (2) angeordnete Kappe (8) aufweist, die bei Unterschreiten einer vorgegebenen Luftgeschwindigkeit in Richtung des Laderaumsaufbaus (2) absinkt und bei Überschreiten der Luftgeschwindigkeit von der Luftströmung gegenüber dem Laderaumaufbau (2) angehoben ist,
**dadurch gekennzeichnet,**
**dass** an oder in dem Luftführungselement (4) mindestens eine Antenne (36) vorgesehen ist, wobei die Antenne (36) ortsfest zu dem Luftführungselement (4) und relativ beweglich zu dem Laderaumaufbau (2) angeordnet ist.

2. Luftführungselement (4) nach Anspruch 1, **dadurch gekennzeichnet, dass** die Kappe (8) aus einem flexiblen Flächengebilde (9) hergestellt ist.

3. Luftführungselement (4) nach Anspruch 1, **dadurch gekennzeichnet, dass** die Kappe (8) als formsteife Haube (10) ausgebildet ist.

4. Luftführungselement (4) nach einem der Ansprüche 1 bis 3, **dadurch gekennzeichnet, dass** die mindestens eine Antenne (36) in die Kappe (8) integriert oder an dieser befestigt ist.

5. Luftführungselement (4) nach Anspruch 3 oder 4, **dadurch gekennzeichnet, dass** an der formsteifen Haube (10) seitlich in Richtung des Laderaumaufbaus (2) gerichtete erste Seitenwände (11) angeordnet sind, die mit gegenüber dem Laderaumaufbau (2) vorstehenden, zweiten Seitenwänden (12) überlappen.

6. Luftführungselement (4) nach Anspruch 5, **dadurch gekennzeichnet, dass** an den ersten oder zweiten Seitenwänden (11, 12) ein Führungsnocken (13) ausgebildet ist, der mit einer in den jeweils anderen Seitenwänden (12, 11) ausgeformten Führungskontur (14) zusammenwirkt.

7. Luftführungselement (4) nach einem der Ansprüche 1 bis 3, **dadurch gekennzeichnet, dass** die Kappe (8) seitlich mittels jeweils einer flexiblen Seitenwand (15) mit dem Laderaumaufbau (2) verbunden ist.

8. Luftführungselement (4) nach einem der Ansprüche 5 bis 7, **dadurch gekennzeichnet, dass** die mindestens eine Antenne (36) in die erste, zweite oder flexible Seitenwand (11, 12, 15) integriert ist.

9. Luftführungselement (4) nach einem der Ansprüche 1 bis 6, **dadurch gekennzeichnet, dass** die Kappe (8) mittels von Distanzelementen (16) an dem Laderaumaufbau (2) gehalten und die mindestens eine Antenne (36) aus dem einen oder mehreren Distanzelementen (16) gebildet oder in diese integriert ist.

10. Luftführungselement (4) nach Anspruch 9, **dadurch gekennzeichnet, dass** die Distanzelemente (16) an der Kappe (8) und dem Laderaumaufbau (2) angreifen.

11. Luftführungselement (4) nach Anspruch 9 oder 10, **dadurch gekennzeichnet, dass** die Distanzelemente (16) aus Gurten (17), Seilen (18) oder in Fahrtrichtung (x) verlaufenden Rippen (19) gebildet sind.

12. Luftführungselement (4) nach Anspruch 9 oder 10, **dadurch gekennzeichnet, dass** die Distanzelemente (16) aus drehbeweglich an der Kappe (8) und dem Laderaumaufbau (2) gelagerten Schwenkarmen (20) gebildet sind.

13. Luftführungselement (4) nach einem der Ansprüche 1 bis 12, **dadurch gekennzeichnet, dass** mindestens an der Kappe (8) eine bis zur Luftaustrittsöffnung (7) verlaufende Schürze (21) befestigt ist.

14. Luftführungselement (4) nach einem der Ansprüche 1 bis 13, **dadurch gekennzeichnet, dass** die Kappe (8) im Bereich der Lufteintrittsöffnung (6) eine in Fahrtrichtung (x) des Lastfahrzeugs (1) schräg nach oben angestellte Auftriebsklappe (23) aufweist.

15. Luftführungselement (4) nach einem der Ansprüche 1 bis 14, **dadurch gekennzeichnet, dass** die Kappe (8) mit einem Flügelprofil (24) ausgebildet ist.

## Claims

1. Air guiding element (4) for reducing the air resistance of a heavy goods vehicle (1) having a storage space structure (2), which can be fitted in the rear end region (3) of the storage space structure (2) from the outer side and which forms an air guiding channel (5) having a front air inlet opening (6) in the travel direction (x) and a rear air outlet opening (7), wherein the air guiding element (4) has a cap (8) which delimits the air guiding channel (5) and which is movably arranged with respect to the storage space structure (2) and which, when a value falls below a predetermined air speed, is lowered in the direction of the storage space structure (2) and, when the air speed is exceeded, is raised by the air flow with respect to the storage space structure (2),
**characterised in that**
at least one antenna (36) is provided on or in the air guiding element (4), wherein the antenna (36) is arranged fixed in position with respect to the air guiding element (4) and so as to be able to be moved relative to the storage space structure (2).

2. Air guiding element (4) according to claim 1, **characterised in that** the cap (8) is produced from a flexible surface structure (9) .

3. Air guiding element (4) according to claim 1, **characterised in that** the cap (8) is constructed as a dimensionally stable hood (10) .

4. Air guiding element (4) according to any one of claims 1 to 3, **characterised in that** the at least one antenna (36) is integrated in the cap (8) or secured thereto.

5. Air guiding element (4) according to claim 3 or 4, **characterised in that** there are arranged on the dimensionally stable hood (10) first side walls (11) which are orientated laterally in the direction of the storage space structure (2) and which overlap with second side walls (12) which protrude with respect to the storage space structure (2).

6. Air guiding element (4) according to claim 5, **characterised in that** on the first or second side walls (11, 12) there is formed a guiding cam (13) which cooperates with a guiding contour (14) formed in the other side walls (12, 11), respectively.

7. Air guiding element (4) according to any one of claims 1 to 3, **characterised in that** the cap (8) is connected laterally in each case by means of a flexible side wall (15) to the storage space structure (2).

8. Air guiding element (4) according to any one of claims 5 to 7, **characterised in that** the at least one antenna (36) is integrated in the first, second or flexible side wall (11, 12, 15).

9. Air guiding element (4) according to any one of claims 1 to 6, **characterised in that** the cap (8) is retained by means of spacer elements (16) on the storage space structure (2) and the at least one antenna (36) is formed from the one or more spacer elements (16) or is integrated therein.

10. Air guiding element (4) according to claim 9, **characterised in that** the spacer elements (16) engage on the cap (8) and the storage space structure (2).

11. Air guiding element (4) according to claim 9 or 10, **characterised in that** the spacer elements (16) are formed from belts (17), cables (18) or ribs (19) which extend in the travel direction (x) .

12. Air guiding element (4) according to claim 9 or 10, **characterised in that** the spacer elements (16) are formed from pivot arms (20) which are supported in a rotationally movable manner on the cap (8) and the storage space structure (2).

13. Air guiding element (4) according to any one of claims 1 to 12, **characterised in that** an apron (21) which extends as far as the air outlet opening (7) is secured at least to the cap (8).

14. Air guiding element (4) according to any one of claims 1 to 13, **characterised in that** the cap (8) in the region of the air inlet opening (6) has a lift flap (23) which is positioned obliquely upwards in the travel direction (x) of the heavy goods vehicle (1).

15. Air guiding element (4) according to any one of claims 1 to 14, **characterised in that** the cap (8) is constructed with a wing profile (24).

## Revendications

1. Élément de guidage d'air (4) destiné à réduire la résistance à l'air d'un véhicule utilitaire (1) doté d'une caisse formant espace de chargement (2), élément qui peut être installé de l'extérieur dans la région arrière (3) de la caisse formant espace de chargement (2) et qui forme un canal de guidage d'air (5) avec une ouverture avant d'entrée d'air (6) et une ouverture arrière de sortie d'air (7), dans la direction de marche (x), sachant que l'élément de guidage d'air (4) présente une coiffe (8) délimitant le canal de guidage d'air (5) et disposée à déplacement par rapport à la caisse formant espace de chargement (2), coiffe qui s'abaisse en direction de la caisse formant espace de chargement (2) en cas de passage sous une vitesse de l'air prédéfinie et qui est relevée par le flux d'air par rapport à la caisse formant espace de chargement (2) en cas de dépassement de ladite vitesse de l'air,
**caractérisé en ce qu'**au moins une antenne (36) est disposée sur ou dans l'élément de guidage d'air (4), sachant que l'antenne (36) est disposée à poste fixe par rapport à l'élément de guidage d'air (4) et à mobilité relative par rapport à la caisse formant espace de chargement (2).

2. Élément de guidage d'air (4) selon la revendication 1, **caractérisé en ce que** la coiffe (8) est fabriquée à partir d'une structure plane flexible (9).

3. Élément de guidage d'air (4) selon la revendication 1, **caractérisé en ce que** la coiffe (8) est réalisée sous la forme d'un capot rigide (10).

4. Élément de guidage d'air (4) selon l'une des revendications 1 à 3, **caractérisé en ce que** l'antenne au moins unique (36) est intégrée dans la coiffe (8) ou fixée sur celle-ci.

5. Élément de guidage d'air (4) selon la revendication 3 ou 4, **caractérisé en ce que** des premières parois latérales (11), orientées latéralement dans la direction de la caisse formant espace de chargement (2), sont disposées sur le capot rigide (10), parois qui chevauchent des deuxièmes parois latérales (12) faisant saillie par rapport à la caisse formant espace de chargement (2).

6. Élément de guidage d'air (4) selon la revendication 5, **caractérisé en ce qu'**une came de guidage (13) est formée sur les premières ou deuxièmes parois latérales (11, 12), laquelle coopère avec un contour de guidage (14) formé dans les autres parois latérales respectives (12, 11).

7. Élément de guidage d'air (4) selon l'une des revendications 1 à 3, **caractérisé en ce que** la coiffe (8) est reliée sur les côtés à la caisse formant espace de chargement (2) par l'intermédiaire d'une paroi latérale flexible respective (15).

8. Élément de guidage d'air (4) selon l'une des revendications 5 à 7, **caractérisé en ce que** l'antenne au moins unique (36) est intégrée dans la première ou deuxième paroi latérale (11, 12) ou dans la paroi latérale flexible (15).

9. Élément de guidage d'air (4) selon l'une des revendications 1 à 6, **caractérisé en ce que** la coiffe (8) est maintenue sur la caisse formant espace de chargement (2) par l'intermédiaire d'éléments d'écartement ou de distance (16), et l'antenne au moins unique (36) est formée par un ou plusieurs éléments d'écartement ou de distance (16) ou intégrée dans ceux-ci.

10. Élément de guidage d'air (4) selon la revendication 9, **caractérisé en ce que** les éléments d'écartement ou de distance (16) agissent sur la coiffe (8) et sur la caisse formant espace de chargement (2).

11. Élément de guidage d'air (4) selon la revendication 9 ou 10, **caractérisé en ce que** les éléments d'écartement ou de distance (16) sont formés par des sangles (17), des câbles (18) ou des tirants (19) s'étendant dans la direction de marche (x).

12. Élément de guidage d'air (4) selon la revendication 9 ou 10, **caractérisé en ce que** les éléments d'écartement ou de distance (16) sont formés par des bras pivotants (20) montés à rotation sur la coiffe (8) et sur la caisse formant espace de chargement (2).

13. Élément de guidage d'air (4) selon l'une des revendications 1 à 12, **caractérisé en ce qu'**une jupe (21) s'étendant jusqu'à l'ouverture de sortie d'air (7) est fixée au moins sur la coiffe (8).

14. Élément de guidage d'air (4) selon l'une des revendications 1 à 13, **caractérisé en ce que** la coiffe (8) présente, dans la région de l'ouverture d'entrée d'air (6), un volet de portance (23) incliné en oblique vers le haut dans la direction de marche (x) du véhicule utilitaire (1).

15. Élément de guidage d'air (4) selon l'une des revendications 1 à 14, **caractérisé en ce que** la coiffe (8) est réalisée avec un profil aérodynamique (24).
